# EUROPEAN PATENT APPLICATION

(11) **EP 1 335 571 A1**
(43) Date of publication of application: **13.08.2003**
(21) Application number: 02075568.2
(22) Date of filing: 08.02.2002
(51) Int. Cl.: H04M 3/42, H04M 3/56

(54) **Automated electronic witness system**

(71) Applicant: Rodriguez Gonzalez, Antonia, 29004 Malaga (ES); Tie Tie Inc., 5 City of Panama (PA)
(72) Inventor: Rodriguez Gonzalez, Antonia, 29004 Malaga (ES)

(57) **Abstract**

Automated electronic system for recording and registering an audiovisual- or audio-communications session between two or more system users, whereby the system comprises such means and such usage procedures, that the mere use of the system by a user implies that this same user acknowledges said system to be a witness that has been authorised by him to witness said audiovisual- or audio-communications session, and acknowledges the fact that an audiovisual- or audio-communications session, as recorded and registered by the system, may contain evidence of the performance of one or more legal acts by him, from which legally enforceable obligations may result towards one or more of the other users of the system, with whom the recorded and registered communications session has been conducted by the first mentioned user.

## Description

### FIELD OF THE INVENTION

The present invention generally relates to an automated electronic system for recording and registration of oral agreements, oral appointments, oral testimonies etc., whereby said system holds for its users the status of authorised electronic witness to said agreements, appointments, testimonies etc.

### BACKGROUND OF THE INVENTION

During his lifetime an average person is party to hundreds of agreements and makes hundreds of legal statements ranging from purchase agreements and labour contracts to insurance agreements, testimonies and the recording and registration of a last will and testament. Most of these agreements and statements are laid down in writing and are authorised by placing the signature(s) of the party/parties involved, whether or not in the presence of an authorised witness, for instance a notary, lawyer, judge or other legal practitioner, as required according to the applicable laws and regulations. Traditionally, according to relevant contract law in most countries, an oral agreement has the same legal status and validity as a written agreement. However in present daily practice almost every agreement is laid down in writing. The main reason for this prevalence of the written agreement is the obvious disadvantage of the oral agreement that lies in the difficulty of accurately recapturing afterwards what was originally orally agreed upon, testified to or proclaimed. With more traditional agreements, like for instance the marriage agreement, this disadvantage is cured by the legal requirement of involvement and/or presence of a sworn civil servant, notary, authorised legal practitioner etc. when the agreement is drawn up/authorised or when an oral testimony/proclamation is made. Such a civil servant, notary or legal practitioner also verifies in most cases the identity of the parties who wish to enter into an agreement or make an oral testimony/proclamation. The majority of agreements and legal statements is however only recorded and registered in written form and authorised by a signature of the part(y)(ies) involved. To avoid ambiguity in the eventual legal interpretation of the contents of a written agreement, the services of a lawyer or other legal practioner are in many cases employed in drawing up the agreement.

The necessity to call in the services of a lawyer or sworn witness in drawing up and authorising agreements and making legal statements, often causes unwanted delays and higher costs, especially in our present economies with their high degree of automation. Despite this fact people tend to record and register agreements in writing, even in relatively 'simple' cases with a very small risk of legal conflicts, mainly because an adequate, efficient and cheap alternative is not available. In such cases the advantages of written agreements often fail to outweigh the administrative effort, delays and costs involved. In addition to this the traditional authorisation by placing a handwritten signature is not compatible with the alfanumerical character of for instance computer systems. In an effort to remedy this drawback PIN(Personal Identification Numbers)-codes, social security numbers etc. were introduced for authorisation purposes. Although these codes and numbers are advantageous for use with automated systems, they are not physically linked to the identity of a person. Consequently, a person who is in possession of another person's PIN-code can 'assume' the latter person's identity when using automated systems, like cash dispensers (ATM's). The use of biometrical features like for instance a fingerprint or the iris pattern of the eye can offer a higher degree of security. A significant drawback of these methods is however in most cases the high technical complexity of the specialised hardware and the high costs involved, which often cause general application of such methods to be economically infeasible.

In the prior art numerous systems and methods are known for recording, authorisation and encryption of documents in electronic form. When used to record, register and authorise agreements and legal statements these systems and methods require however a presence of said agreements and statements in 'electronic' form, which leads again to the aforementioned drawbacks with respect to complexity, cost and security of verification of the personal identity when recording, registering and authorizing agreements and statements. When using these systems and methods to record, register and authorise for instance an agreement, the parties involved at least need to have the use of a computer, access to a data communications medium, like for instance the Internet, and need to agree on the use of compatible procedures and algorithms for adding and verifying 'electronic signatures' and for data encryption.

The aim of the present invention is to remedy the above mentioned drawbacks associated with the prior art by providing an automated electronic system for recording and registration of an audiovisual- or audio-communications session between at least two users of said system, characterized by the fact that said system comprises such means and such usage procedures, that the mere use of the system by a user implies that this same user acknowledges said system to be a witness that has been authorised by him to witness said audiovisual- or audio-communications session,
and, in addition to this, acknowledges the fact that an audiovisual- or audio-communications session, as recorded and registered by the system, may contain evidence of the performance of one or more legal acts by him, from which legally enforceable obligations may result towards one or more of the other users of the system, with whom the recorded and registered communications session has been conducted by the first mentioned user.

Said recorded audiovisual- or audio-communications session may for instance comprise legal acts like entering into an oral agreement or making an official statement. In this way the system according to the present invention combines advantages of the oral agreement, appointment and statement, like speed, simplicity and the possibility to verify the personal identity by means of biometrical features like voice patterns or the physical appearance of people, with the advantages of recording and registering agreements, appointments and statements in electronic form in an automated system.

If using an automated system according to the present invention for recording and registering an audiovisual- or audio-communications session conducted between two or more users of said system, one of the users participating in said communications session may be an electronic system instead of a natural person. This can be advantageous when the system according to the present invention is used for the recording and registration of, for instance, a statement or purchase order made by a single user. In this case said electronic system may be for instance a voice-response system that provides information to the 'other' system user(s) concerning system usage or possible legal implications of the use of the system. In a situation where the system according to the present invention is being used to record and register for instance telephonic purchase orders, a user has to at least acknowledge the fact that the voice-response system with which he communicates, acts in the legal sense as an authorised representative of the party with whom he will finally enter into a purchase agreement.

To guarantee the integrity of the contents of an audiovisual- or audio-communications session as recorded and registered by the system according to the present invention, it can be advantageous to record and register said audiovisual- or audio-communications session in encrypted vorm. From the prior art numerous methods are known for encryption of electronic data.

An audiovisual- or audio-communications session between users of the automated electronic system according to the present invention, that is to be recorded and registered by said system, may advantageously be conducted by means of suitable media for telecommunications and/or datacommunications and peripheral equipment for said telecommunications and datacommunications media. In a simple form such a communications medium may consist of the Public Switched Telephone Network (PSTN), and the peripheral equipment may be a telephone. It may however equally well be a videoconference by means of a highspeed datanetwork.

To guarantee the confidentiality and integrity of the data transfer through said telecommunications and datacommunications media, associated with the recording and registration of an audiovisual- or audio-communications session by the automated electronic system according to the present invention, it can be advantageous to conduct said transfer of data in encrypted form, or in any other form that is able to guarantee the confidentiality and integrity of the data transfer. From the prior art numerous methods are known to secure the transfer of electronic data through telecommunications and datacommunications networks.

The automated electronic system for recording and registering an audiovisual- or audio-communications session according to the present invention advantageously performs the recording and registration of said communications session in a way that enables the use of said recording and registration at a later time for verification of the participation of a specific system user in said communications session. For instance when one would choose to perform said verification of participation through comparison of voice patterns, the recording and registration of a communications session should be performed in a way that offers sufficient possibilities to distinguish the required voice parameters. In this respect there could be for instance a minimum bandwidth requirement.

To identify a specific recording and registration of an audiovisual- or audio-communications session that has been recorded and registered by the system according to the present invention, a unique alphanumerical reference may be assigned to every respective recorded and registered communications session, and this reference may be communicated to the users who participated in that communications session by means of a suitable medium. In this respect one could think of a serial number that is assigned to a recorded and registered communications session by the system according to the present invention, and that is communicated to users who participated in that specific communications session, in the form of, for instance, an S.M.S. (Short Message Service) message. To establish a one-to-one relation between said alphanumerical reference and the contents of the recorded and registered audiovisual- or audio-communications session to which it has been assigned, said alphanumerical reference can be determined from an electronic representation of the recorded and registered communications session by means of known methods and algorithms for data processing. When one would desire, in addition to this, to establish a relation between said alphanumerical reference assigned to an audiovisual- or audio-communications session that has been recorded and registered by the system according to the present invention, and the identity of the participants in that specific communications session, infometrical or biometrical data supplied by or derived from said participants could be used. In this respect one could, for instance, think of voice patterns, a client number, social security number, participant's telephone number that has been identified automatically through for instance CLIP (Calling Line Identification Presentation) etc., as may be required to achieve a desired level of security.

For certain applications of the automated electronic system for recording and registration of an audiovisual- or audio-communications session between two or more users of the system according to the invention it may be required that users make their identity known to the system prior to participating in a communications session that is to be recorded and registered by the system. Depending on the desired level of security, information relating to the identity of a user may consist, for instance, of a client number, PIN-code, social security number, participant's telephone number that has been identified automatically through for instance CLIP (Calling Line Identification Presentation), an electronic represenation of a voice pattern etc., or combinations thereof.

It is to be preferred that a recording and registration of an audiovisual- or audio-communications session that has been established by the system according to the present invention can not be modified afterwards, but can only be replaced by a new recording and registration of a new communications session between the same users who participated in the original communications session. It is evident that, to accomplish this, it is required to verify the identity of the participants in the communications session prior to said new recording and registration of a communications session, in accordance with the desired level of security.

After recording and registration of an audiovisual- or audio-communications session between to or more users of the system according to the present invention, the system can offer the possibility to the participants in said communications session to listen to and/or view a representation of said recorded and registered communication session afterwards in the form of audio and/or video and whether or not remotely through a telecommunications or datacommunications medium. Participants in a recorded and registered communications session or other authorised parties may, for instance, have the possibility to listen to a previously recorded and registered oral agreement by means of a telephone, after their identity has been verified by the system according to the present invention through, for instance the entering of a client number, PIN-code, social security number, automatic identification of the participant's telephone number through CLIP (Calling Line Identification Presentation), comparison of the participant's voice pattern with a pre-recorded voice pattern etc., or combinations thereof, in accordance with the desired level of security. In addition to this a person could, after his authorisation thereto has been verified, on request receive an electronic representation of a communications session that previously has been recorded and registered by the system according to the invention, through a suitable telecommunications or datacommunications medium. Said electronic representation of a communications session could, for instance, consist of an audio or video file with a common data format, that is sent through the Internet by the system according to the present invention.

Additionally, a person could, after his authorisation thereto has been verified, on request receive a written representation of a communications session that previously has been recorded and registered by the system according to the invention, through a suitable telecommunications or datacommunications medium, or by means of normal mail. In case the recorded and registered communications session would be, for instance a telephonic order to purchase certain items from a mail order company, and information like item numbers, order volume, name, adress and bank details have been orally conveyed to the system according to the present invention, said written representation of the recorded and registered communications session could consist of a simple facsimile or electronic mail confirmation of the order. In case, for instance, an oral agreement has been recorded and registered by the system according to the invention, said recorded and registered oral agreement could, on request of the parties to the agreement, be laid down in writing by a specifically authorised person, for instance a lawyer, who may be employed by an organisation that commercially operates the system according to the present invention. Afterwards said parties to the agreement could receive the written representation of the oral agreement through, for instance, registered mail.

If a unique alphanumerical reference has been assigned to an audiovisual- or audio-communications session by the system according to the present invention, it is to be preferred that a user of the system will at least have to make this alphanumerical reference known to the system to prove his authorisation to perform certain actions with respect to the recorded and registered communications session to which said reference is assigned. In this way a minimum level of security is established, that can be extended, if necessary, with procedures to verify the identity of a user who wishes to perform certain actions with respect to a communications session that has been recorded and registered by the system.

To establish a higher level of security, there could be a requirement that the automated electronic system according to the present invention only considers a record/registration of a communications session to be valid, when all of the participants to that specific communications session have confirmed its informational contents. In a simple form this could mean that participants to an audiovisual- or audio-communications session that has been recorded and registered by the system according to the present invention, can listen to an audio representation of the recorded and registered communications session by means of a telephone, and can confirm the informational contents of this audio representation by entering a client number, PIN-code, social security number or the alphanumerical reference that has been assigned to that specific communications session by the system according to the present invention.

To enable actions like the transmission of an electronic representation of a recorded and registered communications session, whether or not in encrypted form, through telecommunications or datacommunications media, like for instance the Internet, it is advantageous to record and register communications sessions in a way that is suitable and efficient for said transmission. One could consider recording and registration of comunications sessions according to commonly used audio- or video-data formats, enabling electronic representations of the communications sessions to be transmitted in compressed or, if desired, in encrypted form through, for instance the Internet.

Because of the present wide-spread use of the Internet, it is advantageous if a user can perform or request certain actions with respect to a communications session that has been recorded and registered by the system according to the invention, by means of an Internet site, after he has sufficiently proved his authorisation thereto to the system according to the present invention. A user could, for instance, by means of said Internet site, request to receive by electronic mail an electronic representation of an audiovisual- or audio-communications session that has been recorded and registered by the system according to the present invention. In that case said user is also required to prove, by way of said Internet site, his authorisation to, for instance, receive said electronic representation of a communications session. This can be accomplished by, for instance, entering a client number, PIN-code, social security number, or the alphanumerical reference that has been assigned to that specific communications session by the system according to the present invention.

The system according to the present invention will be explained in more detail below, according to the attached drawings and description of preferred embodiments. It should be noted however that the described embodiments have been selected exclusively to illustrate application of the system according to the present invention and should not be regarded as limiting such application whatsoever.

### BRIEF DESCRIPTION OF THE DRAWINGS

Figures 1A, 1B, 1C and 1D are flow diagrams illustrating a first preferred embodiment of the system according to the present invention.
Figures 2A and 2B are flow diagrams illustrating a second preferred embodiment of the system according to the present invention.

In the figures similar elements are identified by the same numerical references.

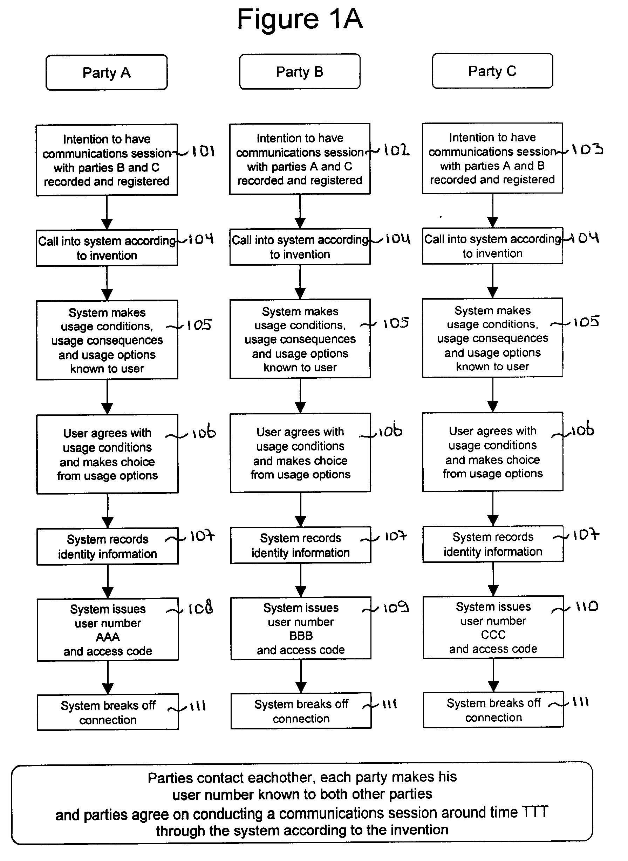

According to a first preferred embodiment of the system according to the present invention three persons, that are in figs. 1A-1D denoted respectively as 'Party A', 'Party B' and 'Party C', have the intention of letting the system according to the present invention record and register a telephonic communications session between them. Such a communications sessions could comprise, for instance, contract negotiations between said three parties. Although this description is based on the recording and registration of a telephone conversation, said communications session could equally well be a video conference by way of a broadband network, or an audio conference through the Internet. In Figure 1A the steps (101), (102) and (103) respectively describe the intention of each of the parties to have the system according to the present invention record and register a communications session between that party and both other parties. In step (104) the parties call, independently of eachother, into the system according to the present invention, which may in this case be a system that can be accessed through the Public Switched Telephone Network (PSTN), whether or not by means of a special phone number with a higher rate, for instance an 0900-number. In step (105) the system according to the present invention makes the sys-tem's usage conditions, as well as the possible (legal) consequences associated with the use of the system known to a calling user by means of a menu with voice messages. With respect to this preferred embodiment a usage condition could be the requirement that a user, prior to further use of the system according to the present invention, acknowledges the system's status as authorised witness of the telephonic communications session that is to be recorded and registered. A legal consequence of the use of the system according to the present invention in this case could be, for instance, that a communications session recorded and registered by the system contains evidence of the performance of one or more legal acts by the user, from which legally enforceable obligations may result towards one or more of the other users of the system, with whom the recorded and registered communications session has been conducted by the first mentioned user. Through said voice message menu a user can learn about the different usage options of the system. These options can comprise, for instance, the possibility for a user to receive, as attachment to an electronic mail message, an electronic representation of a communications session that has been recorded and registered by the system according to the present invention. Through the usage options menu a user may also have the possibility to, for instance, indicate whether and in what way the system will record and register information pertaining to his personal identity, to enable verification of his participation in a recorded and registered communications session afterwards. In a simple form it could be sufficient to store the telephone number of the extension from which the user calls the system according to the invention (CLIP: Calling Line Identification Presentation). However such number does not have a one-to-one relation to a user's physical person. Infometrical parameters like PIN-(Personal Identification Number) codes, a social security number or passportnumber can offer a higher level of security. One could however also decide to store so-called biometrical parameters, like the voice pattern of the user, prior to recording and registration of the communications session by the system according to the present invention. In the preferred embodiment that is presently described it is assumed that the three parties have chosen the same system options with respect to verification of their personal identity. In step (106) a user confirms that he agrees with the system's usage conditions and makes a choice from the available usage options. By means of the telephone keys a user can convey his choices from the menu to the system. In step (107) the system according to the present invention registers the user's identity information. As described above, such information may comprise a telephone number, PIN-code, social security number, passportnumber, voice pattern etc. Next, in steps (108), (109) and (110), the system communicates to the parties A, B and C for example their respective user numbers AAA, BBB and CCC, and an additional access code. This communication of user numbers and access codes could be accomplished by means of an automatic voice message through the telephone that is connecting the user to the system, but could also be accomplished by means of, for instance, an S.M.S.-(Short Message Service) message, electronic mail message etc. After this, the systems breaks off the connection to the user in step (111). The parties A, B and C now contact eachother (112), make their respective user numbers known to eachother, and agree on a time TTT to conduct a telephonic communications session through the system according to the present invention. Depending on the system specifications a user number could, for instance, be valid for a period of 24 hours. If the user does not use his user number within said period, it looses its validity and the user is required to go again through the whole procedure described above and bear the associated costs to acquire a new user number. The system operator could also offer the possibility to use the system based on a contract. In that case a user number and access code may for instance be issued to a user for the total term of the contract. Also in that case, certain identity information as described above, will only have to be entered once. This way a user can save on costs and time of the repeated sign-up procedure when using the system according to the present invention.

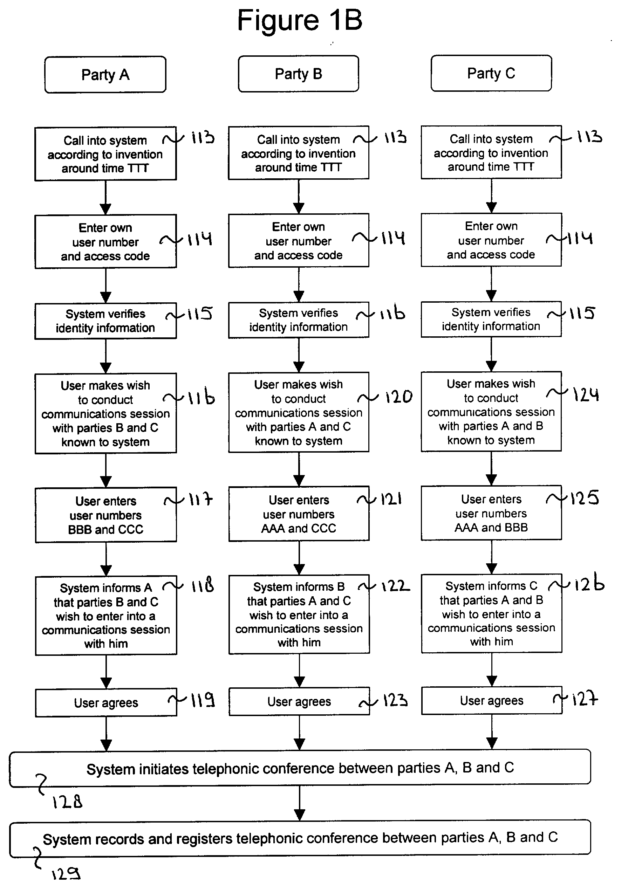

As is shown in step (113) in Figure 1B, the parties A, B and C call into the system according to the present invention around the mutually agreed time TTT. Each party enters his respective user number and access code in step (114), and the system verifies the associated identity information in step (115). As described above, this could comprise verification of a a telephone number, PIN-code, social security number, passportnumber, voice pattern etc. In step (116) party A informs the system that he wants to set up a communications session with parties B and C, and enters the user numbers BBB and CCC of parties B and C in step (117) by means of the keys on his telephone. Party B performs similar actions in steps (120) and (121) with respect to parties A and C, and party C performs these actions in steps (124) and (125) with respect to parties A and B. Because it is unlikely that all three parties complete the login procedure at precisely the same time, a party stays on the phone until he receives a message from the system according to the present invention indicating that both other parties wish to enter into a communications session with him, as is shown in steps (118), (122) and (126) for the respective parties A, B and C. In steps (119), (123) and (127) the respective parties agree to the wish from both other parties to enter into a communications session, in step (128) the system according to the present invention establishes a telephonic conference between the parties A, B and C, and in step (129) recording and registration of said telephonic conference starts.

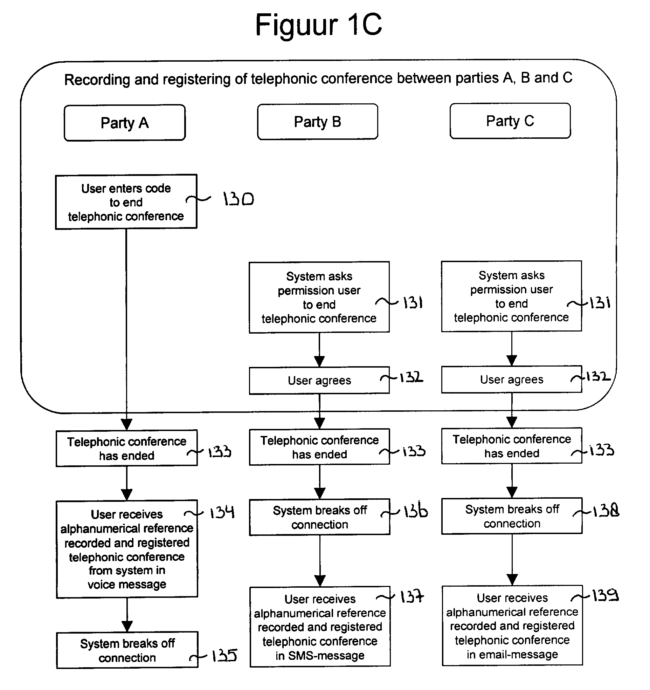

The recording and registration of the telephonic communications session between parties A, B and C by the system according to the present invention is schematically shown in Figure 1C by the rectangular box with rounded corners. In step (130) party A makes known to the system according to the present invention, for instance by entering a specific key sequence, that he wishes to end the telephonic conference. In step (131) the system communicates said wish of party A to parties B and C. This could be established in a simple way by having the system send an audible tone over the telephone connections with parties B and C. Recording and registration of the telephonic conference will only end once both other parties B and C have agreed to this in step (132), for instance by entering a specific key sequence. After all three parties have agreed to this, the system according to the present invention ends the recording and registration of the telephonic conference in step (133). To be able to identify the recording and registration of said telephonic conference afterwards, the system according to the present invention assigns (not shown in the figures) a unique alphanumerical reference, for instance a registration number, to the record/registration. According to the presently described preferred embodiment of the system according to the present invention, party A has to stay on the line after the recording and registration of the telephonic conference has ended, for instance because he has indicated during the sign-up phase shown in Figure 1A, that he wishes to receive said alphanumerical reference that has been assigned to the record and registration of said telephonic conference, in the form of a voice message. After said voice message with said alphanumerical reference has been communicated to party A in step (134), the system breaks off the connection with party A (135). In steps (136) and (138) the system according to the present invention breaks off the connection with the respective parties B and C, because party B has for instance indicated during the sign-up phase, that he wishes to receive said alphanumerical reference by means of an S.M.S.-message, and because party C has for instance indicated during the sign-up phase, that he wishes to receive said alphanumerical reference by email. In step (137) party B receives an S.M.S.-message with said reference and in step (139) party C receives an email with this reference. If either of the parties does not receive the alphanumerical reference, for instance because of problems with the telephone connection, the system according to the present invention may have the possibility for a user to call in again and indicate, after his identity information has been verified, that he wishes to receive said reference again, whether or not in a different way and/or by means of another communications medium. The system according to the present invention could also offer the possibility to perform these actions by way of an associated Internet site.

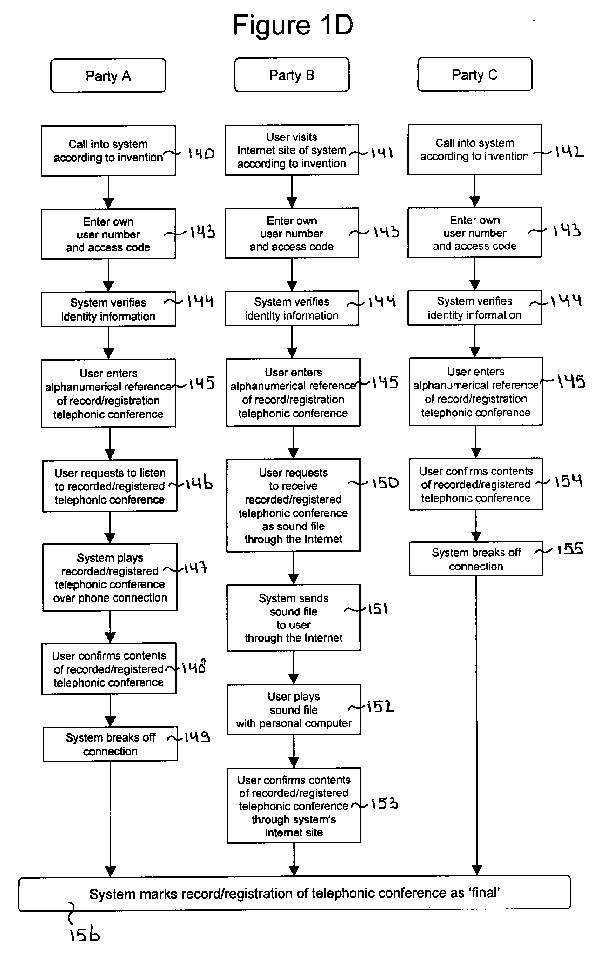

According to the presently described preferred embodiment of the system according to the present invention, the record/registration of said telephonic conference is only marked as 'final', when the participants in said telephonic conference (in this case the parties A, B and C) have confirmed the informational contents of the record/registration. Figure 1D shows a procedure to accomplish this. In steps (140) and (142) the respective parties A and C call into the system according to the present invention, while party B visits the system's asociated Internet site in step (141). These actions of parties A, B and C may happen at completely different times. In step (143) each party enters its user number and access code, and the system verifies the identity information in step (144). In step (145) the alphanumerical reference assigned to the record/registration of the telephonic conference needs to be entered. Parties A and C enter the user number, access code, any additional identity information and the alphanumerical reference by means of the keys on their telephones, while party B performs these actions for instance by means of the keyboard of a personal computer. Party A requests in step (146) playback of the recorded and registered telephonic conference over the phone. As a result, the system according to the present invention plays in step (147) the recorded and registered telephonic conference over the tele-phone connection with party A. Party A confirms in step (148) the contents of the record/registration, for instance by entering a code, and in step (149) the system according to the present invention breaks off the telephone connection with party A. In step (150) party B indicates by way of the system's associated Internet site that he wishes to receive the record/registration of the telephonic conference by means of the Internet. In response to this, the system according to the present invention transmits in step (151) the record/registration of the telephonic conference to party B in the form of a sound file with a suitable data format and, if required, in encrypted form. From the prior art numerous standardised data formats are known, that are suitable for transmitting sound files by means of datacommunications networks like the Internet. In step (152) part B listens to the received sound file using a personal computer that is equipped with suitable means to accomplish this. Party B confirms in step (153) the contents of the record/registration by way of the system's associated Internet site. As described above, Party C has made contact with the system according to the invention using his telephone, has completed the procedure for verification of his identity information, and entered the alphanumerical reference assigned to the record/registration of the telephonic conference. He is however beforehand convinced that the record/registration is correct and confirms the contents directly using his telephone (154), after which the system according to the present invention breaks off the telephone connection with him in step (155). At this point all three of the parties A, B and C have confirmed the contents of the record/registration of the telephonic conference, the system according to the present invention marks the record/registration as 'final' in step (156). What further happens with the record/registration of the telephonic conference depends on the wishes of the users and/or the system's usage options. The record/registration could for instance be deleted by the system after a predetermined period or after joint permission of the parties A, B and C involved. Furthermore the record/registration of the telephonic conference could be used as legal evidence, be converted into a written agreement or statement by persons with the right authorisation etc. The technology necessary to realise the functionality of the system according to this first preferred embodiment is commonly available.

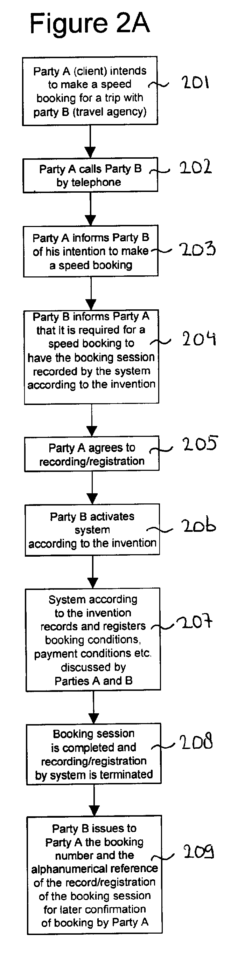

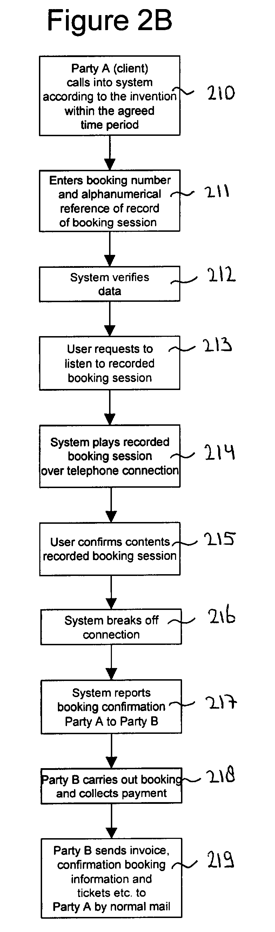

The second preferred embodiment of the system according to the present invention will be described below and finds its application in frequently occurring situations where one party wishes to purchase goods or services from another party, and especially if an oral agreement does not offer sufficient legal security, but there's no time or opportunity to lay down the agreement in writing, or the costs involved in obtaining a written agreement do not outweigh the profits. De preferred embodiment of the system according to the present invention that is shown schematically in figures 2A and 2B can for instance be applied in situations where a client, referred to as 'Party B' hereafter, wishes to make a speed booking for a trip with hotel accomodation with a travel agency, referred to as 'Party B' hereafter. In such cases the resulting agreement can be quite complex, and when the travel agency fails to perform its obligations (incorrect reservations etc.), the consequences can cause much irritation and considerable financial damage for the client. But many times there is no time or opportunity to draw up a 'customised' agreement in writing and make payment in advance. Stap (201) in figure 2A shows the intention of party A to make a speed booking for a trip with party B's travel agency. In step (202) party A calls party B and informs party B of his intentions in step (203). In step (204) party B informs party A that it is required for a speed booking to have the part of the conversation where the booking conditions and the payment conditions are disussed by the parties, hereafter referred to as 'booking session' recorded and registered by the system according to the present invention. In step (205) party A agrees to said recording and registration of the booking session and party B initiates in step (206) a telephonic conference where the system according to the present invention is regarded as third participant in the conversation. In this case the system may be implemented in the computer system or telecommunications infrastructure of the travel agency. The system according to the present invention makes itself known to the parties by means of a voice message and starts in step (207) with the recording and registration of the booking session between parties A and B. During said recording and registration of the booking session by the system, party B simultaneously enters the relevant informatie into his computer. When all necessary information has been exchanged between parties A and B, party B de-activates the system according to the present invention and the recording and registration of the booking session is terminated in step (208). The system now assigns a unique alphanumerical reference to the record/registration of the booking session and makes this reference known to party B, for instance by displaying it on the screen of his computer. Party B mentions the reference to party A in step (209), for instance in combination with a booking number, and informs party A of the procedure to confirm the booking information by means of the system according to the invention. Party B can, for instance, provide a telephone number to party B, to call into the system within 12 hours and confirm the booking. If the booking is not confirmed within 12 hours, then it may, for instance, be deleted. A call to to confirm the booking can for instance be billed at a higher rate. This may provide the travel agency with a booking fee, even when party A does not confirm the booking. To verify the identity of party A when he calls into the system according to the invention to confirm his booking, it may suffice to simply enter the booking number and the alphanumerical reference assigned to the record/registration of the booking session, but it is also possible to identify the number of the telephone extension from which party A calls the system (CLIP: Calling Line identification Presentation), comparison of voice patterns etc.

In step (210) in figure 2B party A calls the system according to the present invention within the set time period of, for instance, 12 hours after recording/registration of the booking session. Now the system can, for instance, instruct party A with respect to the possibilities and consequences of his use of the system and present a menu of options to him, for instance regarding the possibilities to receive a summary of the booking data through email, fax, etc. (not shown in figure 2B). Party A now enters the booking number and the alphanumerical reference assigned to the record/registration of the booking session in step (211). In step (212) the system verifies the data entered in step (211). Party A requests in step (213), for instance by entering a menu option by means of the keypad of his telephone, to play the record/registration of the booking session. In step (214) the system plays the recorded/registered booking session over the telephone connection. Now party A can in step (215), for instance by entering a menu option by means of the keypad of his telephone, confirm the contents of the record/registration of the booking session, after which the system according to the present invention breaks off the connection in step (216). In step (217) the system reports the confirmation by party A to party B and the latter carries out the booking in step (218) and collects the corresponding payment. Depending on the level of automation of the administrative systems of the travel agency, the carrying out of the booking and the collection of payment may take place completely automatically. Now party B sends in step (219) an invoice, an overview of the booking data and possibly travel tickets etc. to party A in step (219). In case it would be sufficient to convey for instance the booking number and/or the alphanumerical reference when checking in at airports and/or hotels, party A would not have to wait for any tickets etc. from the travel agency. This way even more time could be saved. The record/registration could be stored until two weeks after the scheduled return of party A from his trip. This provides a possibility to evaluate the contents of the recorded and registered booking session afterwards, in case of conflicts or damages with regard to the trip. The technology necessary to realise the functionality of the system according to this first preferred embodiment is commonly available.

In addition to the preferred embodiments described above, there are numerous situations in which the system according to the present invention can be advantageously applied.

## Claims

1. Automated electronic system for recording and registering an audiovisual- or audio-communications session between two or more system users, **characterised by** the fact that said system comprises such means and such usage procedures, that the mere use of the system by a user implies that this same user acknowledges said system to be a witness that has been authorised by him to witness said audiovisual- or audio-communications session, and
acknowledges the fact that an audiovisual- or audio-communications session, as recorded and registered by the system, may contain evidence of the performance of one or more legal acts by him, from which legally enforceable obligations may result towards one or more of the other users of the system, with whom the recorded and registered communications session has been conducted by the first mentioned user.

2. Automated electronic system for recording and registering an audiovisual- or audio-communications session between two or more system users according to claim 1, **characterised by** the fact that one of the participants in said communications session is not a natural person, but an electronic system.

3. Automated electronic system for recording and registering an audiovisual- or audio-communications session between two or more system users according to claim 2, **characterised by** the fact that said electronic system, acting as a participant in said audiovisual- or audio-communications session, is a voice-response system.

4. Automated electronic system for recording and registering an audiovisual- or audio-communications session between two or more system users according to one of the preceding claims, **characterised by** the fact that said audiovisual- or audio-communications session is recorded and registered by said automated electronic system in encrypted form.

5. Automated electronic system for recording and registering an audiovisual- or audio-communications session between two or more system users according to one of the preceding claims, **characterised by** the fact that said audiovisual- or audio-communications session that is to be recorded and registered by said system, is conducted by means of suitable media for telecommunications and/or datacommunications, and peripheral equipment for said telecommunications and/or datacommunications media.

6. Automated electronic system for recording and registering an audiovisual- or audio-communications session between two or more system users according to claim 5, **characterised by** the fact that said automated electronic system comprises means that enable to transfer data in relation with said audiovisual- or audio-communications session in encrypted form, or in any other form that is able to guarantee the confidentiality and integrity of the data transfer.

7. Automated electronic system for recording and registering an audiovisual- or audio-communications session between two or more system users according to one of the preceding claims, **characterised by** the fact that said automated electronic system performs the recording and registration of said communications session in a way that enables the use of said record/registration at a later time to verify the participation of a specific system user in said communications session.

8. Automated electronic system for recording and registering an audiovisual- or audio-communications session between two or more system users according to claim 7, **characterised by** the fact that said verification of the participation of a specific system user in said communications session is performed on the basis of infometrical or biometrical data, including voice patterns, that are supplied by or derived from users who participated in said recorded and registered communications session.

9. Automated electronic system for recording and registering an audiovisual- or audio-communications session between two or more system users according to one of the preceding claims, **characterised by** the fact that a unique alphanumerical reference is assigned to every record/registration of a communications session, and that said reference is communicated to the users who participated in that specific communications session, by way of a suitable medium.

10. Automated electronic system for recording and registering an audiovisual- or audio-communications session between two or more system users according to claim 9, **characterised by** the fact that said unique alphanumerical reference is derived from an electronic representation of said recorded and registered audiovisual- or audio-communications session, with the use of known methods and algorithms for data processing, and that said reference is communicated to the users who participated in that specific communications session, by way of a suitable medium.

11. Automated electronic system for recording and registering an audiovisual- or audio-communications session between two or more system users according to claim 9, **characterised by** the fact that said unique alphanumerical reference is derived from infometrical or biometrical data, that are supplied by or derived from one or more system users who participated in said recorded and registered communications session, and that said reference is communicated to the system users who participated in that specific communications session, by way of a suitable medium.

12. Automated electronic system for recording and registering an audiovisual- or audio-communications session between two or more system users according to one of the preceding claims, **characterised by** the fact that users who have indicated to the system that they wish to participate in an audiovisual- or audio-communications session that is to be recorded and registered by the system, have to make their identity known to the system prior to their participation in said communications session.

13. Automated electronic system for recording and registering an audiovisual- or audio-communications session between two or more system users according to one of the preceding claims, **characterised by** the fact that the record/registration of said audiovisual- or audio-communications session can not be modified after recording and registration, but can only be replaced by a new record/registration of a new communications session between the same system users who participated in the original communications session, whereby it is required that said automated system verifies the identity of the system users prior to said new recording and registration of the communications session.

14. Automated electronic system for recording and registering an audiovisual- or audio-communications session between two or more system users according to one of the claims 12 or 13, **characterised by** the fact that said automated system uses infometrical or biometrical data, including voice patterns, to make known and verify the identity of system users.

15. Automated electronic system for recording and registering an audiovisual- or audio-communications session between two or more system users according to one of the preceding claims, **characterised by** the fact that a system user who participated in a communications session that has been recorded and registered by the system, has the possibility to listen to and/or view said recorded and registered communication session afterwards in the form of audio and/or video and whether or not remotely through a telecommunications or datacommunications medium, but only after said automated system has verified that the system user is authorised thereto.

16. Automated electronic system for recording and registering an audiovisual- or audio-communications session between two or more users according to one of the preceding claims, **characterised by** the fact that a system user who participated in a communications session that has been recorded and registered by the system, has the possibility to receive on request an electronic representation of said recorded and registered communication session afterwards by means of a telecommunications or datacommunications medium, but only after said automated system has verified that the system user is authorised thereto.

17. Automated electronic system for recording and registering an audiovisual- or audio-communications session between two or more system users according to one of the preceding claims, **characterised by** the fact that a system user who participated in a communications session that has been recorded and registered by the system, has the possibility to receive on request a written representation of said recorded and registered communication session afterwards by means of a suitable telecommunications or datacommunications medium, or by normal mail, but only after said automated system has verified that the system user is authorised thereto.

18. Automated electronic system for recording and registering an audiovisual- or audio-communications session between two or more system users according to one of the claims 15, 16 or 17, **characterised by** the fact that for said verification of the authorisation of a system user, it is at least required that this system user communicates the unique alphanumerical reference assigned to the record/registration of the specific communications session.

19. Automated electronic system for recording and registering an audiovisual- or audio-communications session between two or more system users according to one of the preceding claims, **characterised by** the fact that a record/registration of a communications session is only marked by the automated system as 'final' after the informational contents of said record/registration has been confirmed by all system users who participated in that specific communications session.

20. Automated electronic system for recording and registering an audiovisual- or audio-communications session between two or more system users according to one of the preceding claims, **characterised by** the fact that a communications session is recorded and registered in such electronic form, or can be converted to such electronic form, that the recorded and registered communications session can be efficiently sent, whether or in encrypted form, by means of telecommunications and/or datacommunications media.

21. Automated electronic system for recording and registering an audiovisual- or audio-communications session between two or more system users according to one of the preceding claims, **characterised by** the fact that a system user has the possibility to perform certain actions with respect to a communications session that has been recorded and registered by the system, or request such actions, by way of an Internet site, provided said system user can prove his authorisation thereto to the system.
